# EUROPEAN PATENT APPLICATION

(11) **EP 4 801 158 A1**
(43) Date of publication of application: **02.09.2026**
(21) Application number: 23956431.3
(22) Date of filing: 25.10.2023
(51) Int. Cl.: H04W 72/11

(54) **INFORMATION TRANSMISSION METHOD, APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/126620
(87) International publication number: WO 2025/086179

(57) **Abstract**

Embodiments of the present disclosure provide an information transmission method, an apparatus, a communication device, a communication system, and a storage medium. The information transmission method comprises: a terminal receives first information, wherein the first information is used for indicating a resource configuration of a first scheduling request (SR), the first SR is used for requesting from a network device a resource of a first report sent by the terminal, and the first report comprises a reference signal resource identifier and a signal quality parameter corresponding to the reference signal resource identifier.

## Description

### TECHNICAL FIELD

The present disclosure relates to the field of communication technology, and specifically to an information transmission method, an information transmission apparatus, a communication device, a communication system and a storage medium.

### BACKGROUND

In New Radio (NR), especially in Frequency Range 2 (above 6 GHz), due to rapid attenuation of high-frequency channels, beam-based transmission and reception need to be used to ensure the coverage. Currently, it is considered that a base station configures periodic, semi-persistent, or non-periodic beam reports.

### SUMMARY

Embodiments of the disclosure provide an information transmission method, an information transmission apparatus, a communication device, and a storage medium.

According to a first aspect of the embodiments of the present disclosure, an information transmission method is provided. The method is performed by a terminal and includes: receiving first information, in which the first information indicates resource configuration of a first scheduling request (SR), the first SR is used by the terminal to request a network device for a resource to send a first report, and the first report includes a reference signal resource identifier (ID) and a signal quality parameter corresponding to the reference signal resource ID.

According to a second aspect of the embodiments of the present disclosure, an information transmission method is provided. The method is performed by a network device and includes: sending first information, in which the first information indicates resource configuration of a first SR, the first SR is used by a terminal to request the network device for a resource to send a first report, and the first report includes a reference signal resource ID and a signal quality parameter corresponding to the reference signal resource ID.

According to a third aspect of the embodiments of the present disclosure, an information transmission method is provided. The method is performed by a communication system and includes: sending, by a network device, first information to a terminal, in which the first information indicates resource configuration of a first SR, the first SR is used by the terminal to request the network device for a physical uplink shared channel (PUSCH) resource to send a first report, and the first report includes a reference signal resource ID and a signal quality parameter corresponding to the reference signal resource ID.

According to a fourth aspect of the embodiments of the present disclosure, a terminal is provided, including: at least one of a transceiving module or a processing module; in which the terminal is used to perform optional implementations of the first aspect.

According to a fifth aspect of the embodiments of the present disclosure, a network device is provided, including: at least one of a transceiving module or a processing module; in which the network device is used to perform optional implementations of the second aspect.

According to a sixth aspect of the embodiments of the present disclosure, a communication system is provided, including a terminal and a network device, in which the terminal is configured to perform the information transmission method according to the first aspect, and the network device is configured to perform the information transmission method according to the second aspect.

According to a seventh aspect of the embodiments of the present disclosure, a communication device is provided, including one or more processors. The processor is configured to call instructions to cause the communication device to perform the information transmission method according to the first or second aspect.

According to an eighth aspect of the embodiments of the present disclosure, a storage medium for storing instructions is provided. When the instructions are running on a communication device, the communication device is caused to perform the information transmission method according to the first or second aspect.

The terminal determines the resource configuration of the first SR and requests the PUSCH resource of the first report based on the first SR, which improves the flexibility and timeliness of beam report transmission.

### BRIEF DESCRIPTION OF THE DRAWINGS

The accompanying drawings, which are incorporated in and form part of this specification, illustrate embodiments of the disclosure and, together with the description, serve to explain the principles of the embodiments of the disclosure.
FIG. 1 is a diagram illustrating an architecture of a communication system according to an exemplary embodiment.
FIG. 2 is a flowchart illustrating an information transmission method according to an exemplary embodiment.
FIG. 3a is a flowchart illustrating an information transmission method according to an exemplary embodiment.
FIG. 3b is a flowchart illustrating an information transmission method according to an exemplary embodiment.
FIG. 4 is a flowchart illustrating an information transmission method according to an exemplary embodiment.
FIG. 5 is a flowchart illustrating an information transmission method according to an exemplary embodiment.
FIG. 6 is a flowchart illustrating an information transmission method according to an exemplary embodiment.
FIG. 7a is a block diagram illustrating a terminal according to an exemplary embodiment.
FIG. 7b is a block diagram illustrating a network device according to an exemplary embodiment.
FIG. 8a is a block diagram illustrating a communication device according to an exemplary embodiment.
FIG. 8b is a block diagram illustrating a chip according to an exemplary embodiment.

### DETAILED DESCRIPTION

Embodiments of the disclosure provide an information transmission method, an information transmission apparatus, a communication device, a communication system and a storage medium.

In a first aspect, the embodiments of the present disclosure provide an information transmission method. The method is performed by a terminal and includes: receiving first information, in which the first information indicates resource configuration of a first scheduling request (SR), the first SR is used by the terminal to request a network device for a resource to send a first report, and the first report includes a reference signal resource identifier (ID) and a signal quality parameter corresponding to the reference signal resource ID.

In the above embodiment, the terminal determines the resource configuration of the first SR and requests the PUSCH resource of the first report based on the first SR, which improves the flexibility and timeliness of beam report transmission.

In some embodiments in combination with the first aspect, in some embodiments, the method further includes: sending at least one of the first SR or hybrid automatic repeat request (HARQ) feedback information, in which a resource of the first SR is configured to at least partially overlap with a resource of the HARQ feedback information.

In the above embodiments, sending the first SR and the HARQ feedback information reduces the possibility of missing important information and improves the communication reliability.

In some embodiments in combination with the first aspect, sending the at least one of the first SR or the HARQ feedback information includes: sending the at least one of the first SR or the HARQ feedback information based on a priority of the first SR and a priority of the HARQ feedback information.

In the above embodiments, at least one of the first SR or the HARQ feedback information is sent based on the priority. On the one hand, sending at least one of the first SR or the HARQ feedback information based on the priority may cause information with the priority to be sent, which reduces information missing. On the other hand, sending the first SR to request the PUSCH resource of the first report improves the flexibility and timeliness of beam report transmission.

In some embodiments in combination with the first aspect, in some embodiments, the first SR and the HARQ feedback information are located in the same resource, a physical uplink control channel (PUCCH) format 0 is used by the HARQ feedback information, and the priority of the HARQ feedback information is higher than the priority of the first SR; or the first SR and the HARQ feedback information are located in the same slot, a PUCCH format 1 is used by the HARQ feedback information, one of a PUCCH format 0 or the PUCCH format 1 is used by the first SR, and the priority of the HARQ feedback information is higher than the priority of the first SR.

In the above embodiments, at least one of the first SR or the HARQ feedback information is sent based on the priority. On the one hand, sending at least one of the first SR or the HARQ feedback information based on the priority may cause information with the priority to be sent, which reduces information missing. On the other hand, sending the first SR to request the PUSCH resource of the first report improves the flexibility and timeliness of beam report transmission.

In some embodiments in combination with the first aspect, in some embodiments, sending the at least one of the first SR or the HARQ feedback information includes at least one of: in a case that the first SR and the HARQ feedback information are located in the same resource, and a PUCCH format 0 is used by the HARQ feedback information, sending the HARQ feedback information in the resource where the first SR and the HARQ feedback information are located; in a case that the first SR and the HARQ feedback information are located in the same slot, a PUCCH format 1 is used by the HARQ feedback information, and one of the PUCCH format 0 or the PUCCH format 1 is used by the first SR, sending the HARQ feedback information in the slot; or in a case that there is no HARQ feedback information, sending the first SR.

In the above embodiments, when there is a resource conflict between the first SR and the HARQ feedback information, the HARQ feedback information is sent preferentially to meet the current communication needs and improve the compatibility.

In some embodiments in combination with the first aspect, in some embodiments, sending the at least one of the first SR or the HARQ feedback information includes: sending the first SR and the HARQ feedback information by using the resource of the HARQ feedback information.

In the above embodiments, the first SR and the HARQ feedback information are multiplexed. On the one hand, the signaling overhead caused by additional transmission of the first SR is reduced. On the other hand, the first SR may be timely sent when the beam quality changes, and the communication reliability is thus improved.

In some embodiments in combination with the first aspect, in some embodiments, sending the first SR and the HARQ feedback information by using the resource of the HARQ feedback information includes: in a case that the first SR and the HARQ feedback information are in the same slot, one of a PUCCH format 2, a PUCCH format 3 or a PUCCH format 4 is used by the HARQ feedback information, sending the first SR and the HARQ feedback information in the slot, in which bits occupied by the first SR are appended to bits occupied by the HARQ feedback information.

In the above embodiments, the first SR and the HARQ feedback information are multiplexed. On the one hand, the signaling overhead caused by additional transmission of the first SR is reduced. On the other hand, the first SR may be timely sent when the beam quality changes, and the communication reliability is thus improved.

In some embodiments in combination with the first aspect, in some embodiments, the method further includes: sending the first SR and channel state information (CSI) by using a resource of the CSI.

In the above embodiments, the first SR and the CSI are multiplexed. On the one hand, the signaling overhead caused by additional transmission of the first SR is reduced. On the other hand, the first SR may be timely sent when the beam quality changes, and the communication reliability is thus improved.

In some embodiments in combination with the first aspect, in some embodiments, sending the first SR and the CSI by using the resource of the CSI includes: in a case that the first SR and the CSI are located in the same slot, one of a PUCCH format 2, a PUCCH format 3 or a PUCCH format 4 is used by the CSI, sending the first SR and the CSI in the slot, in which bits occupied by the first SR are appended to bits occupied by CSI feedback information.

In the above embodiments, the first SR and the CSI are multiplexed. On the one hand, the signaling overhead caused by additional transmission of the first SR is reduced. On the other hand, the first SR may be timely sent when the beam quality changes, and the communication reliability is thus improved.

In some embodiments in combination with the first aspect, in some embodiments, a codepoint of the bits occupied by the first SR indicates an SR ID requesting a PUSCH resource.

In the above embodiments, the codepoint of the first SR may clearly indicate whether the PUSCH resource is requested.

In some embodiments in combination with the first aspect, in some embodiments, the method further includes: sending the first report based on a trigger event.

In the above embodiments, the first report is sent based on occurrence of the trigger event, which improves the flexibility and timeliness of beam report transmission.

In some embodiments in combination with the first aspect, in some embodiments, the trigger event for triggering the first report includes at least one of: a change in a beam meeting a first condition; or a change in a beam group meeting a second condition, in which the beam group is configured to determine two beams for the terminal to simultaneously perform at least one of reception or transmission.

In the above embodiments, the first report is triggered by changes in the beam and/or the beam group, which thus improves the flexibility of triggering the first report.

In some embodiments in combination with the first aspect, in some embodiments, the change in the beam meeting the first condition includes at least one of: the beam including a first beam, a signal quality parameter of the first beam being lower than a first threshold, in which the first beam includes one of: a best beam indicated by a second report, all beams indicated by the second report, a worst beam indicated by the second report, or a beam indicated by the network device; and the second report is sent before sending the first report; the beam including a second beam, a signal quality parameter of the second beam being higher than a second threshold, in which the second beam includes one of: a non-best beam indicated by a second report, a beam other than all beams indicated by the second report, and a beam other than a beam indicated by the network device; a signal quality parameter of a second beam being higher than a signal quality parameter of a first beam, and a difference between the signal quality parameter of the second beam and the signal quality parameter of the first beam being higher than a third threshold; currently determined K third beams with better quality parameters being not exactly the same as K fourth beams with better quality parameters indicated by the second report, in which the beam includes the third beams and the fourth beams; or the K third beams without a beam indicated by the network device.

In the above embodiments, the first report is triggered by different beam changes, which improves the flexibility of triggering the first report.

In some embodiments in combination with the first aspect, in some embodiments, the currently determined K third beams with better quality parameters being not exactly the same as the K fourth beams with better quality parameters indicated by the second report, includes at least one of: a difference between a quality parameter of a beam with a best quality parameter among the K fourth beams and a quality parameter of a beam with a best quality parameter among the K third beams being higher than a fourth threshold; or a difference between a quality parameter of a beam with a worst quality parameter among the K fourth beams and a quality parameter of a beam with a worst quality parameter among the K third beams being higher than a fifth threshold.

In the above embodiments, the first report is triggered by different beam changes, which improves the flexibility of triggering the first report.

In some embodiments in combination with the first aspect, in some embodiments, the change in the beam group meeting the second condition includes at least one of: a beam associated with at least one first beam group of N beam groups indicated by a second report meeting a third condition, in which the second report is sent before sending the first report; or a quality parameter change value of at least one beam in the first beam group being higher than a sixth threshold.

In the above embodiments, the first report is triggered by different beam group changes, which improves the flexibility of triggering the first report.

In some embodiments in combination with the first aspect, in some embodiments, the beam associated with the at least one first beam group of the N beam groups indicated by the second report meeting the third condition includes at least one of: a signal quality parameter of a fifth beam being higher than the sixth threshold, in which the fifth beam includes one of: a non-best beam indicated by the second report, a beam other than all beams indicated by the second report, or a beam other than a beam indicated by the network device; and the fifth beam is associated with the first beam group; a signal quality parameter of a sixth beam being lower than a seventh threshold, in which the sixth beam includes a beam indicated by the second report; and the sixth beam is associated with the first beam group; or a signal quality parameter of a fifth beam being higher than a signal quality parameter of a sixth beam, and a difference between the signal quality parameter of the fifth beam and the signal quality parameter of the sixth beam being higher than an eighth threshold.

In the above embodiments, the first report is triggered by different beam group changes, which improves the flexibility of triggering the first report.

In some embodiments in combination with the first aspect, in some embodiments, the fifth beam includes two beams associated with the at least one first beam group: the signal quality parameter of the fifth beam is a single signal quality parameter corresponding to the two beams; and/or the sixth beam includes two beams associated with the at least one first beam group: the signal quality parameter of the sixth beam is a single signal quality parameter corresponding to the two beams.

In the above embodiments, triggering the first report by the single signal quality parameter improves the accuracy of triggering the first report by the beam group.

In some embodiments in combination with the first aspect, in some embodiments, the first report includes a reference signal resource ID corresponding to at least one beam group and a signal quality parameter corresponding to the reference signal resource ID corresponding to the at least one beam group.

In the above embodiments, the reference signal resource ID indicates the beam, which improves the convenience of beam indication.

In some embodiments in combination with the first aspect, in some embodiments, the signal quality parameter includes at least one of: a layer 1-reference signal received power (L1-RSRP), or a layer 1-signal to interference plus noise ratio (L1-SINR).

In some embodiments in combination with the first aspect, in some embodiments, the first SR includes one of: an SR for beam failure recovery (BFR), or an SR for the first report.

In the above embodiments, the flexibility of beam report transmission is improved by multiplexing an SR for BFR and/or a dedicated SR to schedule the first beam report.

In a second aspect, the embodiments of the present disclosure provide an information transmission method. The method is performed by a network device and includes: sending first information, in which the first information indicates resource configuration of a first SR, the first SR is used by a terminal to request the network device for a resource to send a first report, and the first report includes a reference signal resource ID and a signal quality parameter corresponding to the reference signal resource ID.

In the above embodiments, the terminal determines the resource configuration of the first SR, requests the PUSCH resource of the first report based on the first SR, which improves the flexibility and timeliness of beam report transmission.

In some embodiments in combination with the second aspect, in some embodiments, the method further includes: receiving at least one of the first SR or HARQ feedback information, in which the resource of the first SR is configured to at least partially overlap with a resource of the HARQ feedback information.

In some embodiments in combination with the second aspect, in some embodiments, receiving the at least one of the first SR or the HARQ feedback information includes: receiving the at least one of the first SR or the HARQ feedback information, in which the at least one of the first SR or the HARQ feedback information is sent by the terminal based on a priority of the first SR and a priority of the HARQ feedback information.

In some embodiments in combination with the second aspect, in some embodiments, the priority of the HARQ feedback information is higher than the priority of the first SR.

In some embodiments in combination with the second aspect, in some embodiments, the first SR and the HARQ feedback information are located in the same resource, a PUCCH format 0 is used by the HARQ feedback information, and the priority of the HARQ feedback information is higher than the priority of the first SR; or the first SR and the HARQ feedback information are located in the same slot, a PUCCH format 1 is used by the HARQ feedback information, one of a PUCCH format 0 or the PUCCH format 1 is used by the first SR, and the priority of the HARQ feedback information is higher than the priority of the first SR.

In some embodiments in combination with the second aspect, in some embodiments, receiving the at least one of the first SR or the HARQ feedback information includes at least one of: receiving the HARQ feedback information, in which in a case that the terminal determines that the first SR and the HARQ feedback information are located in the same resource and a PUCCH format 0 is used by the HARQ feedback information, the HARQ feedback information is sent by the terminal in the resource where the first SR and the HARQ feedback information are located; receiving the HARQ feedback information, in which in a case that the terminal determines that the first SR and the HARQ feedback information are located in the same slot, a PUCCH format 1 is used by the HARQ feedback information, and one of the PUCCH format 0 or the PUCCH format 1 is used by the first SR, the HARQ feedback information is sent by the terminal in the slot; or receiving the first SR, in which in a case that the terminal determines that there is no HARQ feedback information, the first SR is sent by the terminal.

In some embodiments in combination with the second aspect, in some embodiments, receiving the at least one of the first SR or the HARQ feedback information includes: receiving the first SR and the HARQ feedback information by using the resource of the HARQ feedback information.

In some embodiments in combination with the second aspect, in some embodiments, in a case that the terminal determines that the first SR and the HARQ feedback information are in the same slot, one of a PUCCH format 2, a PUCCH format 3 or a PUCCH format 4 is used by the HARQ feedback information, the first SR and the HARQ feedback information are sent by the terminal in the slot, in which bits occupied by the first SR are appended to bits occupied by the HARQ feedback information.

In some embodiments in combination with the second aspect, in some embodiments, the method further includes: receiving the first SR and CSI by using a resource of the CSI.

In some embodiments in combination with the second aspect, in some embodiments, in a case that the terminal determines that the first SR and the CSI are located in the same slot, one of a PUCCH format 2, a PUCCH format 3 or a PUCCH format 4 is used by the CSI, the first SR and the CSI are sent by the terminal in the slot where the first SR and the CSI are located, in which bits occupied by the first SR are appended to bits occupied by CSI feedback information.

In some embodiments in combination with the second aspect, in some embodiments, a codepoint of the bits occupied by the first SR indicates an SR ID requesting a PUSCH resource.

In some embodiments in combination with the second aspect, in some embodiments, the method further includes: receiving the first report from the terminal based on a trigger event.

In some embodiments in combination with the second aspect, in some embodiments, the trigger event for triggering the first report includes at least one of: a change in a beam meeting a first condition; or a change in a beam group meeting a second condition, in which the beam group is configured to determine two beams for the terminal to simultaneously perform at least one of reception or transmission.

In some embodiments in combination with the second aspect, in some embodiments, the change in the beam meeting the first condition includes at least one of: a signal quality parameter of a first beam being lower than a first threshold, in which the first beam includes one of: a best beam indicated by a second report, all beams indicated by the second report, a worst beam indicated by the second report, or a beam indicated by the network device; and the second report is sent before sending the first report; a signal quality parameter of a second beam being higher than a second threshold, in which the second beam includes one of: a non-best beam indicated by a second report, a beam other than all beams indicated by the second report, and a beam other than a beam indicated by the network device; a signal quality parameter of a second beam being higher than a signal quality parameter of a first beam, and a difference between the signal quality parameter of the second beam and the signal quality parameter of the first beam being higher than a third threshold; currently determined K third beams with better quality parameters being not exactly the same as K fourth beams with better quality parameters indicated by the second report; or the K third beams without a beam indicated by the network device.

In some embodiments in combination with the second aspect, in some embodiments, the currently determined K third beams with better quality parameters being not exactly the same as the K fourth beams with better quality parameters indicated by the second report, includes at least one of: a difference between a quality parameter of a beam with a best quality parameter among the K fourth beams and a quality parameter of a beam with a best quality parameter among the K third beams being higher than a fourth threshold; or a difference between a quality parameter of a beam with a worst quality parameter among the K fourth beams and a quality parameter of a beam with a worst quality parameter among the K third beams being higher than a fifth threshold.

In some embodiments in combination with the second aspect, in some embodiments, the change in the beam group meeting the second condition includes at least one of: a beam associated with at least one first beam group of N beam groups indicated by a second report meeting a third condition, in which the second report is sent before sending the first report; or a quality parameter change value of at least one beam in the first beam group being higher than a sixth threshold.

In some embodiments in combination with the second aspect, in some embodiments, the beam associated with the at least one first beam group of the N beam groups indicated by the second report meeting the third condition includes at least one of: a signal quality parameter of a fifth beam associated with the first beam group being higher than the sixth threshold, in which the fifth beam includes one of: a non-best beam indicated by the second report, a beam other than all beams indicated by the second report, or a beam other than a beam indicated by the network device; a signal quality parameter of a sixth beam associated with the first beam group being lower than a seventh threshold, in which the sixth beam includes a beam indicated by the second report; or a signal quality parameter of a fifth beam being higher than a signal quality parameter of a sixth beam, and a difference between the signal quality parameter of the fifth beam and the signal quality parameter of the sixth beam being higher than an eighth threshold.

In some embodiments in combination with the second aspect, in some embodiments, the fifth beam includes two beams associated with the at least one first beam group: the signal quality parameter of the fifth beam is a single signal quality parameter corresponding to the two beams; and/or the sixth beam includes two beams associated with the at least one first beam group: the signal quality parameter of the sixth beam is a single signal quality parameter corresponding to the two beams.

In some embodiments in combination with the second aspect, in some embodiments, the first report includes a reference signal resource ID corresponding to at least one beam group and a signal quality parameter corresponding to the reference signal resource ID corresponding to the at least one beam group.

In some embodiments in combination with the second aspect, in some embodiments, the signal quality parameter includes at least one of: a L1-RSRP, or a L1-SINR.

In some embodiments in combination with the second aspect, in some embodiments, the first SR includes one of: an SR for BFR, or an SR for the first report.

In a third aspect, the embodiments of the present disclosure provide an information transmission method. The method is performed by a communication system and includes: sending, by a network device, first information to a terminal, in which the first information indicates resource configuration of a first SR, the first SR is used by the terminal to request the network device for a resource to send a first report, and the first report includes a reference signal resource ID and a signal quality parameter corresponding to the reference signal resource ID.

In a fourth aspect, the embodiments of the present disclosure provide a terminal, including at least one of a transceiving module or a processing module, in which the terminal is configured to perform optional implementations of the first aspect.

In a fifth aspect, the embodiments of the present disclosure provide a network device, including at least one of a transceiving module or a processing module, in which the network device is configured to perform optional implementations of the second aspect.

In a sixth aspect, the embodiments of the present disclosure provide a communication system, including: a terminal and a network device, in which the terminal is configured to perform the information transmission method according to the first aspect, and the network device is configured to perform the information transmission method according to the second aspect.

In a seventh aspect, the embodiments of this disclosure provide a communication device, including one or more processors. The processor is configured to call instructions to cause the communication device to perform the information transmission method according to the first or second aspect.

In an eighth aspect, the embodiments of the present disclosure provide a storage medium for storing instructions. When the instructions are running on a communication device, the communication device is caused to perform the information transmission method according to the first or second aspect.

It may be understood that the terminal, the network device, the communication system, the storage medium, the program product, the computer program, the chip, or the chip system are all used to perform the method in the embodiments of the present disclosure. Therefore, for beneficial effects they may achieve, reference may be made to the beneficial effects in the corresponding method, which will not be repeated here.

The embodiments of the present disclosure provide an information transmission method, an information transmission apparatus, a communication device, a communication system and a storage medium. In some embodiments, the terms such as information transmission method, information processing method, and communication method may be used interchangeably. the terms such as information transmission apparatus and information processing apparatus, apparatus for information transmission may be used interchangeably; and the terms such as communication system, information processing system may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple" may be used interchangeably.

In some embodiments, the descriptions such as "at least one of A, B", "A and/or B", "in one case, A; in another case, B", "in response to one case, A; in response to another case, B" may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B" may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "time/frequency" and "time-frequency domain" refer to a time domain and/or a frequency domain.

In some embodiments, the terms such as "in response to...", "in response to determining...", "in the case of/that...", "at the time of...", "when...", "if...", "in case of/that..." may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in the embodiments. In some case, the terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device included in a network, for example, an access network device, a core network function node (core network device), etc.

In some embodiments, the terms such as "access network device (AN device)", "radio access network (RAN) device", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network function node, or the network device may be replaced with the terminal. For example, the structure where communication between access network devices, core network function nodes, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or part of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links.

In some embodiments, the terminal may be replaced with the access network device, the core network function node, or the network device. In this case, the access network device, the core network function node, or the network device may also be configured with all or part of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

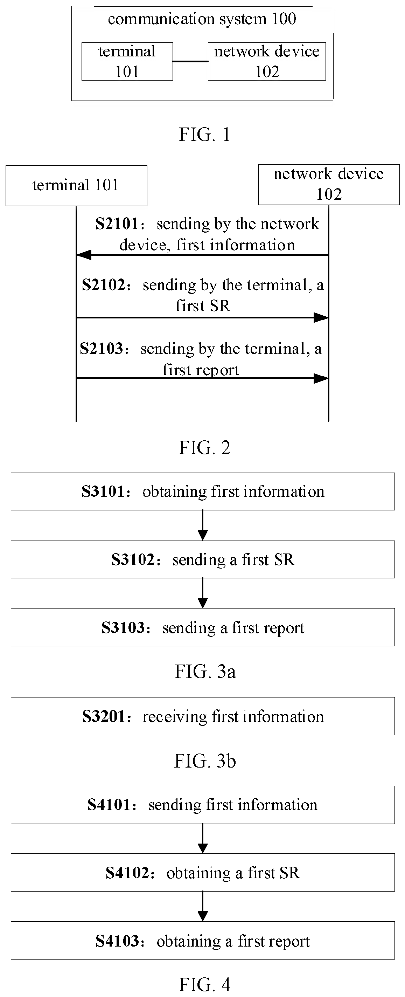

FIG. 1 is an architecture diagram illustrating a communication system according to the embodiments of the present disclosure.

As shown in FIG. 1, the communication system 100 includes at least one of a terminal 101 or a network device 102.

In some embodiments, the network device 102 includes at least one of a core network device or an access network device.

In some embodiments, the core network device may be a single device including an access and mobility management function (AMF), a user plane function (UPF), a policy control function (PCF) 1021, a session management function (SMF) 1022, etc., or it may be multiple devices or a group of devices, including all or part of the AMF, the SMF, the UPF, the PCF, etc. The network elements may be virtual or physical. The core network includes, for example, at least one of evolved packet core (EPC), 5G core network (5GCN), or next generation core (NGC).

In some embodiments, the access network device may be, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the technical solutions of the disclosure may be applied to the Open RAN architecture. In this case, the interfaces between or within access network devices involved in the embodiments of the disclosure may be transformed into internal interfaces of the Open RAN. The processes and information interactions between these internal interfaces may be implemented by software or programs.

In some embodiments, the access network device may be composed of a central unit (CU) and a distributed unit (DU). The CU may also be called a control unit. The CU-DU structure may be used to split the protocol layer of the access network device, so that some protocol layer functions are centrally controlled by the CU, while the remaining part or all of the protocol layer functions are distributed in the DU and centrally controlled by the CU, which is not limited herein.

In some embodiments, the terminal 101 includes, for example, at least one of a mobile phone, a wearable device, an Internet of Things device, or a car, a smart car, and a Pad with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, which is not limited herein.

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the terminal may measure beam quality and report the beam quality to the network device via a beam report. Then, the beam used for communication is determined.

In some embodiments, the terminal determines a change in beam quality, and the base station configures a reporting period or a non-periodic reporting occasion. However, the length of the reporting period or the non-periodic reporting occasion configured by the base station may not be the most suitable. If the reporting period is too short, the best K beams reported twice may be identical, which wastes the signaling; if the reporting period is too long, the beams may change and it may not be time to report, which affects the communication quality. For non-periodic reporting, the reporting occasion when the base station triggers the terminal to report may be too early or too late, which is not the most appropriate reporting occasion.

If resources for periodically reporting are configured by the base station, the above problems of resource waste or significant delay may occur. Therefore, how to configure or acquire the resources for beam reporting is a problem that needs to be solved.

FIG. 2 is an interaction diagram illustrating an information transmission method according to an embodiment of the present disclosure. As shown in FIG. 2, embodiments of the disclosure relate to an information transmission method for a communication system 100. The method includes the following steps at S2101 to S2103.

At S2101, a network device sends first information.

In some embodiments, the network device sends the first information to a terminal.

In some embodiments, the first information indicates resource configuration of a first SR. Optionally, the resource configuration may include at least one of: a time-domain resource of the SR, a frequency-domain resource of the SR, and a sequence of the SR.

In some embodiments, the first SR is used to request the network device for a resource, which is used for sending a first report; or the first SR is used to request from the network device, a resource for sending the first report. In some embodiments, the first SR includes one of: a positive SR, or a negative SR. The positive SR means that the terminal has a need for an SR at a time point of SR resources (i.e., there is a need to send the SR). The negative SR means that the terminal has no need for an SR at the time point of SR resources (i.e., there is no need to send the SR).

Optionally, the resource for sending the first report includes a PUSCH resource.

In some embodiments, the first report indicates a signal quality parameter of a beam to the network device. Optionally, the signal quality parameter of the beam is determined by the terminal. In some embodiments, the signal quality parameter includes at least one of: an L1-RSRP, or an L1-SINR.

In some embodiments, the first report may include an ID of a beam and a signal quality parameter of the beam. The beam may be indicated by a reference signal resource ID, that is, the ID of the beam may be the reference signal resource ID corresponding to the beam. The first report includes a reference signal resource ID and a signal quality parameter corresponding to the reference signal resource ID. The reference signal resource ID includes at least one of: a synchronization signal/physical broadcast channel block (SSB) ID, or a channel state information reference signal (CSI-RS) ID.

The first SR includes one of: an SR for beam failure recovery (BFR), or an SR for the first report.

In some embodiments, the first SR may be reused/multiplexed with the SR for BFR. The first SR may be used for BFR or to request a resource for the first report from the network device.

In some embodiments, the first SR is an SR dedicated for the first report. The first SR is dedicated to request the resource for the first report from the network device.

In some embodiments, the first report may be triggered based on a trigger event.

In some embodiments, step S2101 may be omitted. The terminal may determine the resource configuration of the SR based on a communication protocol or the like.

At S2102, the terminal sends a first SR.

In some embodiments, the terminal sends the first SR to the network device. The terminal may send the first SR to the network device based on the resource configuration indicated by the first information. It is worth noting that the terminal may determine the resource configuration of the first SR in other ways, which may be not limited to the method in step S2101.

In some embodiments, a resource of the first SR is configured to at least partially overlap with a resource of HARQ feedback information.

In some embodiments, the terminal sends at least one of the first SR or the HARQ feedback information.

Optionally, bits occupied by the first SR may at least partially overlap with bits occupied by the HARQ feedback information.

In some embodiments, the terminal sends at least one of the first SR or the HARQ feedback information based on a priority of the first SR and a priority of the HARQ feedback information.

In some embodiments, the priority of the HARQ feedback information is higher than the priority of the first SR. For example, when both the first SR and HARQ feedback information need to be sent simultaneously, if the resource of the first SR overlaps with the bits of the HARQ feedback information, then the HARQ feedback information may be sent first.

In some embodiments, when a transmission resource of the first SR collides with that of the HARQ feedback information, at least one of the first SR or the HARQ feedback information is sent based on the priority of the first SR and the priority of the HARQ feedback information.

In some embodiments, the first SR and HARQ feedback information are located in the same resource, and a PUCCH format 0 is used by the HARQ feedback information, then the terminal sends the HARQ feedback information in that resource.

That is, in this case, the priority of HARQ feedback information is higher than the priority of the first SR; or it may be considered that the priority of the HARQ feedback information and the priority of the first SR are related to the PUCCH format for transmitting the HARQ feedback information; or it may be considered that the priority of the first SR, the priority of the HARQ feedback information, and/or a size relationship for the priority of the first SR and the priority of the HARQ feedback information may be determined based on the PUCCH format for transmitting the HARQ feedback information.

Optionally, the first SR and the HARQ feedback information being located in the same resource means that the first SR and the HARQ feedback information are located in the same PUCCH time-domain resource, and/or the first SR and HARQ feedback information are located in the same PUCCH frequency-domain resource. For example, if the first SR and the HARQ feedback information are located in the same slot, then the first SR and the HARQ feedback information may be considered to be located in the same resource.

In some embodiments, in a case that the first SR and the HARQ feedback information are located in the same slot, one of a PUCCH format 0 or a PUCCH format 1 is used by the first SR and the PUCCH format 1 is used by the HARQ feedback information, the HARQ feedback information is sent in the same slot.

That is, in this case, the priority of the HARQ feedback information may be considered higher than the priority of the first SR; or it may be considered that the priority of the HARQ feedback information and the priority of the first SR are related to the PUCCH format for transmitting the HARQ feedback information and the PUCCH format for the first SR; or it may be considered that the priority of the first SR, the priority of the HARQ feedback information, and/or a size relationship for the priority of the first SR and the priority of the HARQ feedback information may be determined based on the PUCCH format for transmitting the HARQ feedback information and the PUCCH format for the first SR.

In the above embodiments, in some embodiments, a number of bits occupied by the HARQ feedback information in the PUCCH format 0 and a number of bits occupied by the HARQ feedback information in the PUCCH format 1 are less than or equal to 2.

In some embodiments, in a case that the first SR and the HARQ feedback information are located in the same slot, and one of a PUCCH format 2, a PUCCH format 3 or a PUCCH format 4 is used by the HARQ feedback information, the first SR and the HARQ feedback information are sent in the same slot, in which bits occupied by the first SR are appended to bits occupied by the HARQ feedback information. A number of bits occupied by the HARQ feedback information in the PUCCH format 2, a number of bits occupied by the HARQ feedback information in the PUCCH format 3, a number of bits occupied by the HARQ feedback information in the PUCCH format 4 are greater than 2. Therefore, the bits occupied by the first SR may be appended to the bits occupied by the HARQ feedback information.

In this case, it may be considered that the priority of the HARQ feedback information is equal to the priority of the first SR; the terminal may send both the HARQ feedback information and the first SR simultaneously. Or, it may be considered that the priority of the HARQ feedback information and the priority of the first SR are related to the PUCCH format for transmitting the HARQ feedback information; or it may be considered that the priority of the first SR, the priority of the HARQ feedback information, and/or a size relationship for the priority of the first SR and the priority of the HARQ feedback information may be determined based on the PUCCH format for transmitting the HARQ feedback information.

In some embodiments, the bits occupied by the first SR may be appended to the bits occupied by the HARQ feedback information, which may include at least one of the following situations: a situation where the first SR may occupy high bits and the HARQ feedback information may occupy low bits; or a situation where the first SR may occupy low bits and the HARQ feedback information may occupy high bits. The first SR may occupy high or low bits, which may be based on a pre-agreed agreement or a communication protocol.

In some embodiments, if the resource of the first SR is configured to at least partially overlap with the resource of the HARQ feedback information, and the terminal does not have the HARQ feedback information, then the terminal may send the first SR.

In some embodiments, a codepoint of the bits occupied by the first SR indicates an SR ID requesting a PUSCH resource.

Optionally, the bits occupied by the first SR are the same as the bits occupied by other SRs, which may be referred to as the bits occupied by the SR, or the bits occupied by the first SR and other SRs.

In some embodiments, the first SR overlaps with other SRs (such as SRs for BFR, listen before talk (LBT), etc.), and a codepoint of the bits occupied by the first SR indicates an SR ID requesting a PUSCH resource. The overlap between the first SR and other SRs may include one of: a resource overlap, or a field location overlap.

Optionally, the bits occupied by the first SR and other SRs may be appended to the bits occupied by the HARQ feedback information. For example, the first SR and other SRs may occupy high bits while the HARQ feedback information may occupy low bits; or the first SR may occupy low bits while the HARQ feedback information may occupy high bits.

The first SR and other SRs may be indicated by SR resource IDs. For example, the SR resource ID (i.e., schedulingRequestResourceId) may include: a schedulingRequestResourceId associated with schedulingRequestID-BFR-SCell; a schedulingRequestResourceId associated with schedulingRequestID-BFR; a schedulingRequestResourceId associated with schedulingRequestID-BFR2 if the UE provides two limited resource reservation (LRR) capabilities; a schedulingRequestResourceId associated with schedulingRequestID-Beamreport; and a schedulingRequestResourceId associated with schedulingRequestID-LBT-Scell. The code points corresponding to the bits occupied by the SR correspond one-to-one with the SRs in the above order. For example, taking SR occupying 3 bits as an example, 000 corresponds to the schedulingRequestResourceId associated with schedulingRequestID-BFR-SCell, 001 corresponds to the schedulingRequestResourceId associated with schedulingRequestID-BFR, 010 corresponds to the schedulingRequestResourceId associated with schedulingRequestID-BFR2 if the UE provides two LRR capabilities, 011 corresponds to the schedulingRequestResourceId associated with schedulingRequestID-Beamreport, and 100 corresponds to the schedulingRequestResourceId associated with schedulingRequestID-LBT-Scell. The schedulingRequestResourceId associated with schedulingRequestID-Beamreport is a newly introduced first SR. The above instance order is just one example, and the first SR may be placed before or after any of the other SRs. Different codepoints of the SR-occupied bits may respectively indicate the SR ID requesting the PUSCH resource.

In some embodiments, in a case that the first SR and the CSI are located in the same slot, and one of a PUCCH format 2, a PUCCH format 3, or a PUCCH format 4 is used by the CSI, the first SR and the CSI are sent in the same slot, in which bits occupied by the first SR are appended to bits occupied by CSI feedback information.

In some embodiments, a number of bits occupied by the CSI in the PUCCH format 2, a number of bits occupied by the CSI in the PUCCH format 3, and a number of bits occupied by the CSI in the PUCCH format 4 are greater than 2. Therefore, the bits occupied by the first SR may be appended to the bits occupied by the CSI.

Optionally, the first SR may occupy high bits, and the CSI may occupy low bits.

Optionally, the first SR may occupy low bits, and the CSI may occupy high bits.

In some embodiments, a codepoint of the bits occupied by the first SR indicates an SR ID requesting a PUSCH resource.

Optionally, the bits occupied by the first SR are the same as the bits occupied by other SRs, which may be referred to as the bits occupied by the SR, or the bits occupied by the first SR and other SRs.

In some embodiments, the first SR overlaps with other SRs (such as SRs for BFR, LBT, etc.), and a codepoint of the bits occupied by the first SR indicates an SR ID requesting a PUSCH resource.

Optionally, the bits occupied by the first SR and other SRs may be appended to the bits occupied by the CSI. For example, the first SR and other SRs may occupy high bits, while the CSI may occupy low bits; or the first SR may occupy low bits, and the CSI may occupy high bits.

The method in which the first SR and other SRs may be indicated by SR resource IDs is as described above and will not be repeated here.

In some embodiments, the network device determines the PUSCH resource of the first report based on the first SR.

In some embodiments, the network device sends resource indication information indicating the PUSCH resource to the terminal.

At S2103, the terminal sends the first report.

In some embodiments, the terminal sends the first report to the network device.

In some embodiments, the terminal sends the first report based on the PUSCH resource indicated by the network device.

In some embodiments, the terminal sends the first report to the network device based on triggering of a trigger event.

In some embodiments, the trigger event for triggering the first report includes at least one of: a change in a beam meeting a first condition; or a change in a beam group meeting a second condition, in which the beam group is configured to determine two beams for the terminal to simultaneously perform at least one of reception or transmission.

In some embodiments, the first report is sent based on a beam, and the first report is sent when the change in the beam meets the first condition.

In some embodiments, the first report is sent based on a beam group, and the first report is sent when the change in the beam meets the first condition.

In some embodiments, the first report is sent based on a beam group, and the first report is sent when the change in the beam group meets the second condition.

In some embodiments, the terminal may indicate two beam groups to the network device, in which each beam group includes at least one beam. The terminal or the network device may select one beam from each beam group to form a beam pair.

Optionally, the beam pair is two beams supported by the terminal that may be used simultaneously for receiving at the terminal.

Optionally, the beam pair is two beams supported by the terminal that may be used simultaneously for transmitting at the terminal.

Optionally, the beam pair is two beams supported by the terminal that may be used simultaneously for both receiving and transmitting at the terminal.

In some embodiments, the terminal may indicate at least one beam group to the network device, in which each beam group includes two beams, and the two beams included in the beam group may form a beam pair. The function of the beam pair is as described above and will not be repeated here.

In some embodiments, during the process of reporting based on beam groups, the beam report (such as the first report) includes beam pair indication information to indicate one of: the beam pair being two beams supported by the terminal that may be used simultaneously for receiving at the terminal; the beam pair being two beams supported by the terminal that may be used simultaneously for transmitting at the terminal; or the beam pair being two beams supported by the terminal that may be used simultaneously for both receiving and transmitting at the terminal.

In some embodiments, the first report includes a reference signal resource ID corresponding to at least one beam group and a signal quality parameter corresponding to the reference signal resource ID corresponding to the at least one beam group.

In some embodiments, during the beam group-based process, the beam report (such as a first report) may use a reference signal resource ID of a reference signal to indicate a beam in the beam group.

Optionally, the reference signal resource ID may include at least one of: an SSB ID, or a an CSI-RS ID.

In some embodiments, the signal quality parameters include at least one of: an L1-RSRP, or an L1-SINR.

In some embodiments, the beam may include a first beam; the change in the beam meeting the first condition includes: a signal quality parameter of the first beam being lower than a first threshold, in which the first beam includes one of: a best beam indicated by a second report, all beams indicated by the second report, a worst beam indicated by the second report, or a beam indicated by the network device; and the second report is sent before sending the first report. The first beam includes a beam currently used by the terminal. The second report may be a report adjacent to the first report and be sent to the network device before the first report. The first report is used to report a signal quality parameters of the transmit (Tx) beam.

Optionally, the beam indicated by the network device includes at least one of beams indicated by the network device through transmission configuration indicator state (TCI-state) or spatial relation information. A spatial reception parameter corresponding to Quasi colocation (QCL) type D in the TCI state may be referred to as beams.

In some embodiments, the beam may include a second beam; the change in the beam meeting the first condition includes: a signal quality parameter of the second beam being higher than a second threshold, in which the second beam includes one of: a non-best beam indicated by a second report, a beam other than all beams indicated by the second report, and a beam other than a beam indicated by the network device. Optionally, the second beam includes candidate beams for the terminal.

In some embodiments, the change in the beam meeting the first condition includes: a signal quality parameter of a second beam being higher than a signal quality parameter of a first beam, and a difference between the signal quality parameter of the second beam and the signal quality parameter of the first beam being higher than a third threshold. Optionally, the second beam includes a beam currently used by the terminal; and the second beam includes candidate beams of the terminal.

In some embodiments, the change in the beam meeting the first condition includes: currently determined K third beams with better quality parameters being not exactly the same as K fourth beams with better quality parameters indicated by the second report.

Optionally, the K third beams with better quality parameters may be K beams that are currently determined to be the best in different beam directions.

Optionally, the K fourth beams with better quality parameters may be K beams that are the best in different beam directions and indicated by the second report.

In some embodiments, the K third beams with better quality parameters currently determined being not exactly the same as the K fourth beams with better quality parameters indicated by the second report, includes at least one of: a difference between a quality parameter of a beam with the best quality parameter among the K fourth beams and a quality parameter of a beam with the best quality parameter among the K third beams being higher than a fourth threshold; or a difference between a quality parameter of a beam with the worst quality parameter among the K fourth beams and a quality parameter of a beam with the worst quality parameter among the K third beams being higher than a fifth threshold. The difference between the quality parameter of the beam with the best quality parameter among the K fourth beams and the quality parameter of the beam with the best quality parameter among the K third beams being higher than the fourth threshold, includes at least one of: a difference between a quality parameter of a beam with the best quality parameter in a first beam direction among the K fourth beams and a quality parameter of a beam with the best quality parameter in the first beam direction among the K third beams being higher than the fourth threshold; or a difference between a quality parameter of a beam with the best quality parameter in at least one beam direction among the K fourth beams and a quality parameter of a beam with the best quality parameter in the at least one beam direction among the K third beams being higher than the fourth threshold.

The difference between the quality parameter of the beam with the worst quality parameter among the K fourth beams and the quality parameter of the beam with the worst quality parameter among the K third beams being higher than the fifth threshold, includes at least one of: a difference between a quality parameter of a beam with the worst quality parameter in a first beam direction among the K fourth beams and a quality parameter of a beam with the worst quality parameter in the first beam direction among the K third beams being higher than the fifth threshold; or a difference between a quality parameter of a beam with the worst quality parameter in at least one beam direction among the K fourth beams and a quality parameter of a beam with the worst quality parameter in the at least one beam direction among the K third beams being higher than the fifth threshold.

In some embodiments, the change in the beam meeting the first condition includes that M third beams do not include the beam indicated by the network device. Optionally, the M third beams include M third beams with determined better quality parameters. Optionally, M may be equal to K.

In some embodiments, the change in the beam group meeting the second condition includes that a beam associated with at least one first beam group of N beam groups indicated by a second report meets a third condition, in which the second report is sent before sending the first report.

In some embodiments, the beams associated with the first beam group include at least one of: beams in the first beam group, or beams outside a second beam group.

In some embodiments, the at least one beam associated with the first beam group satisfies meeting the third condition includes that the at least one beam associated with the first beam group has changed.

In some embodiments, the change in the beam group meeting the second condition includes that a quality parameter change value of at least one beam in the first beam group is higher than a sixth threshold.

In some embodiments, the beam associated with the at least one first beam group of the N beam groups indicated by the second report meeting the third condition includes that a signal quality parameter of a fifth beam associated with the first beam group is higher than the sixth threshold, in which the fifth beam includes one of: a non-best beam indicated by the second report, a beam other than all beams indicated by the second report, or a beam other than a beam indicated by the network device. Optionally, the fifth beam may be a candidate beam. Here, the fifth beam may be a beam associated with the first beam group when the terminal sends a beam report based on the beam group.

In some embodiments, the beam associated with the at least one first beam group of the N beam groups indicated by the second report meeting the third condition includes that a signal quality parameter of a sixth beam associated with the first beam group is lower than a seventh threshold, in which the sixth beam includes a beam indicated by the second report. Optionally, the sixth beam may be a currently used beam. Here, the sixth beam may be a beam associated with the first beam group when the terminal sends a beam report based on the beam group.

In some embodiments, the beam associated with the at least one first beam group of the N beam groups indicated by the second report meeting the third condition includes that a signal quality parameter of a fifth beam is higher than a signal quality parameter of a sixth beam, and a difference between the signal quality parameter of the fifth beam and the signal quality parameter of the sixth beam is higher than an eighth threshold.

In some embodiments, the beam associated with the at least one first beam group meeting the third condition includes that the fifth beam includes two beams associated with the at least one first beam group: the signal quality parameter of the fifth beam is a single signal quality parameter corresponding to the two beams; and/or the sixth beam includes two beams associated with the at least one first beam group: the signal quality parameter of the sixth beam is a single signal quality parameter corresponding to the two beams.

In some embodiments, the two beams of at least one first beam group may include two beams in one first beam group; or two beams belonging to two different first beam groups.

In some embodiments, a beam in a beam group may be indicated by a reference signal resource ID of a reference signal.

Optionally, the reference signal resource ID may include at least one of: an SSB ID, or a an CSI-RS ID.

In some embodiments, the single signal quality parameter may be a statistical value of two beam signal quality parameters.

Optionally, the single signal quality parameter is an average value of the two beam signal quality parameters. For example, the single signal quality parameter may be a first L1-RSRP, and the first L1-RSRP may be an average value of L1-RSRPs of two beam signals, but is not limited herein.

Optionally, the single signal quality parameter may be a composite value derived from signal quality parameters of the two beams. For example, the single signal quality parameter may be a first SINR. For example, the first SINR may a value obtained after dividing a sum of strengths of the two beam signals by an interference and noise value of other beam signals than the two beam signals.

In some embodiments, the term "information" may be used interchangeably with the terms such as "message", "signal", "signaling", "report", "configuration", "indication", "instruction", "command", "channel", "parameter", "field", "data".

In some embodiments, the term "send" may be used interchangeably with the terms such as "emit," "report," or "transmit."

The information transmission method involved in the embodiments of the disclosure may include at least one of steps S2101 to S2103. For example, step S2101 may be implemented as an independent embodiment, step S2102 may be implemented as an independent embodiment, and step S2103 may be implemented as an independent embodiment.

The execution order of steps S2101 to S2103 is not limited. Each of the steps S2101 to S2103 may be combined or implemented as an independent embodiment.

For example, steps S2102 and S2103 may be combined and implemented as an independent embodiment; steps S2101 to S2103 may be combined and implemented as an independent embodiment, which is not limited herein.

FIG. 3a is a flowchart illustrating an information transmission method according to an embodiment of the present disclosure. As shown in FIG. 3a, embodiments of the disclosure relate to an information transmission method performed by a terminal 101. The method includes the following steps at S3101 to S3103.

At S3101, first information is obtained.

In some embodiments, for optional implementations of step S3101, reference may be made to optional implementations of step S2101 in FIG. 2 and other related parts in the embodiments involved in FIG. 2, which will not be repeated here.

In some embodiments, the terminal 101 may receive the first information from the network device 102 or other entities, which is not limited herein.

In some embodiments, the terminal 101 obtains the first information as specified in a protocol.

In some embodiments, the terminal 101 obtains the first information from upper layer(s).

In some embodiments, the terminal 101 obtains the first information by information processing.

In some embodiments, step S3101 is omitted, and the terminal 101 autonomously implements the function indicated by the first information, or the above function is default or default.

At S3102, a first SR is sent.

In some embodiments, for optional implementations of step S3102, reference may be made to optional implementations of step S2102 in FIG. 2 and other related parts in the embodiments involved in FIG. 2, which will not be repeated here.

At S3103, a first report is sent.

In some embodiments, for optional implementations of step S3103, reference may be made to optional implementations of step S2103 in FIG. 2 and other related parts in the embodiments involved in FIG. 2, which will not be repeated here.

The information transmission method involved in the embodiments of the disclosure may include at least one of steps S3101 to S3103. For example, step S3101 may be implemented as an independent embodiment, step S3102 may be implemented as an independent embodiment, and step S3103 may be implemented as an independent embodiment.

For example, step S3102 and step S3103 may be combined and implemented as an independent embodiment; steps S3101 to S3103 may be combined and implemented as an independent embodiment, which is not limited herein.

FIG. 3b is a flowchart illustrating an information transmission method according to an embodiment of the present disclosure. As shown in FIG. 3b, embodiments of the disclosure relate to an information transmission method performed by a terminal 101. The method includes the following step at S3201.

At S3201, first information is received.

In some embodiments, the first information indicates resource configuration of a first SR, the first SR is used by the terminal to request the network device for a resource to send a first report, and the first report includes a reference signal resource ID and a signal quality parameter corresponding to the reference signal resource ID.

In some embodiments, the method further includes: sending at least one of the first SR or HARQ feedback information, in which a resource of the first SR is configured to at least partially overlap with a resource of the HARQ feedback information.

In some embodiments, sending the at least one of the first SR or the HARQ feedback information includes: sending the at least one of the first SR or the HARQ feedback information based on a priority of the first SR and a priority of the HARQ feedback information.

In some embodiments, the priority of the HARQ feedback information is higher than the priority of the first SR.

In some embodiments, the first SR and the HARQ feedback information are located in the same resource, a PUCCH format 0 is used by the HARQ feedback information, and the priority of the HARQ feedback information is higher than the priority of the first SR; or the first SR and the HARQ feedback information are located in the same slot, a PUCCH format 1 is used by the HARQ feedback information, one of the PUCCH format 0 or the PUCCH format 1 is used by the first SR, and the priority of the HARQ feedback information is higher than the priority of the first SR.

In some embodiments, sending the at least one of the first SR or the HARQ feedback information includes at least one of: in a case that the first SR and the HARQ feedback information are located in the same resource, and a PUCCH format 0 is used by the HARQ feedback information, sending the HARQ feedback information in the same resource where the first SR and the HARQ feedback information are located; in a case that the first SR and the HARQ feedback information are located in the same slot, a PUCCH format 1 is used by the HARQ feedback information, and one of the PUCCH format 0 or the PUCCH format 1 is used by the first SR, sending the HARQ feedback information in the same slot; or in a case that there is no HARQ feedback information, sending the first SR.

In some embodiments, sending the at least one of the first SR or the HARQ feedback information includes: sending the first SR and the HARQ feedback information by using the resource of the HARQ feedback information.

In some embodiments, sending the first SR and the HARQ feedback information by using the resource of the HARQ feedback information includes: in a case that the first SR and the HARQ feedback information are in the same slot, one of a PUCCH format 2, a PUCCH format 3 or a PUCCH format 4 is used by the HARQ feedback information, sending the first SR and the HARQ feedback information in the same slot, in which bits occupied by the first SR are appended to bits occupied by the HARQ feedback information.

In some embodiments, the method further includes: sending the first SR and CSI by using a resource of the CSI.

In some embodiments, sending the first SR and the CSI by using the resource of the CSI includes: in a case that the first SR and the CSI are located in the same slot, one of a PUCCH format 2, a PUCCH format 3 or a PUCCH format 4 is used by the CSI, sending the first SR and the CSI in the slot where the first SR and the CSI are located, in which bits occupied by the first SR are appended to bits occupied by CSI feedback information.

In some embodiments, a codepoint of the bits occupied by the first SR indicates an SR ID requesting a PUSCH resource.

In some embodiments, the method further includes: sending the first report based on a trigger event.

In some embodiments, the trigger event for triggering the first report includes at least one of: a change in a beam meeting a first condition; or a change in a beam group meeting a second condition, in which the beam group is configured to determine two beams for the terminal to simultaneously perform at least one of reception or transmission.

In some embodiments, the change in the beam meeting the first condition includes at least one of: the beam including a first beam, a signal quality parameter of the first beam being lower than a first threshold, in which the first beam includes one of: a best beam indicated by a second report, all beams indicated by the second report, a worst beam indicated by the second report, or a beam indicated by the network device; and the second report is sent before sending the first report; the beam including a second beam, a signal quality parameter of the second beam being higher than a second threshold, in which the second beam includes one of: a non-best beam indicated by a second report, a beam other than all beams indicated by the second report, and a beam other than a beam indicated by the network device; a signal quality parameter of a second beam being higher than a signal quality parameter of a first beam, and a difference between the signal quality parameter of the second beam and the signal quality parameter of the first beam being higher than a third threshold; currently determined K third beams with better quality parameters being not exactly the same as K fourth beams with better quality parameters indicated by the second report, in which the beam includes the third beams and the fourth beams; or the K third beams without a beam indicated by the network device.

In some embodiments, the currently determined K third beams with better quality parameters being not exactly the same as the K fourth beams with better quality parameters indicated by the second report, includes at least one of: a difference between a quality parameter of a beam with a best quality parameter among the K fourth beams and a quality parameter of a beam with a best quality parameter among the K third beams being higher than a fourth threshold; or a difference between a quality parameter of a beam with a worst quality parameter among the K fourth beams and a quality parameter of a beam with a worst quality parameter among the K third beams being higher than a fifth threshold.

In some embodiments, the change in the beam group meeting the second condition includes at least one of: a beam associated with at least one first beam group of N beam groups indicated by a second report meeting a third condition, in which the second report is sent before sending the first report; or a quality parameter change value of at least one beam in the first beam group being higher than a sixth threshold.

In some embodiments, the beam associated with the at least one first beam group of the N beam groups indicated by the second report meeting the third condition includes at least one of: a signal quality parameter of a fifth beam being higher than the sixth threshold, in which the fifth beam includes one of: a non-best beam indicated by the second report, a beam other than all beams indicated by the second report, or a beam other than a beam indicated by the network device; and the fifth beam is associated with the first beam group; a signal quality parameter of a sixth beam being lower than a seventh threshold, in which the sixth beam includes a beam indicated by the second report; and the sixth beam is associated with the first beam group; or a signal quality parameter of a fifth beam being higher than a signal quality parameter of a sixth beam, and a difference between the signal quality parameter of the fifth beam and the signal quality parameter of the sixth beam being higher than an eighth threshold.

In some embodiments, in some embodiments, the fifth beam includes two beams associated with the at least one first beam group: the signal quality parameter of the fifth beam is a single signal quality parameter corresponding to the two beams; and/or the sixth beam includes two beams associated with the at least one first beam group: the signal quality parameter of the sixth beam is a single signal quality parameter corresponding to the two beams.

In some embodiments, the first report includes a reference signal resource ID corresponding to at least one beam group and a signal quality parameter corresponding to the reference signal resource ID corresponding to the at least one beam group.

In some embodiments, the signal quality parameter includes at least one of: an L 1-RSRP, or an L1-SINR.

In some embodiments, the first SR includes one of: an SR for BFR, or an SR for the first report.

FIG.4 is a flowchart illustrating an information transmission method according to an embodiment of the present disclosure. As shown in FIG.4, embodiments of the disclosure relate to an information transmission method performed by a network device 102. The method includes the following steps at S4101 to S4103.

At S4101, first information is sent.

For optional implementation of step S4101, reference may be made to optional implementation of step S2101 in FIG. 2 and other related parts in the embodiments involved in FIG. 2, which will not be repeated here.

At 4102, a first SR is obtained.

For optional implementation of step S4102, reference may be made to optional implementation of step S2102 in FIG. 2 and other related parts in the embodiments involved in FIG. 2, which will not be repeated here.

In some embodiments, network device 102 may receive the first SR from the terminal 101 or other entities, which is not limited herein.

In some embodiments, the network device 102 obtains a first SR as specified in a protocol.

In some embodiments, the network device 102 obtains the first SR from upper layer(s).

In some embodiments, the network device 102 obtains the first SR by information processing.

In some embodiments, step S4102 is omitted, and the network device 102 autonomously implements the function indicated by the first SR, or the above function is default or default.

At S4103, a first report is obtained.

For optional implementation of step S4103, reference may be made to optional implementation of step S2103 in FIG. 2 and other related parts in the embodiments involved in FIG. 2, which will not be repeated here.

In some embodiments, the network device 102 may receive the first report from the terminal 101 or other entities, which is not limited herein.

In some embodiments, the network device 102 obtains the first report as specified in a protocol.

In some embodiments, the network device 102 obtains the first report from upper layer(s).

In some embodiments, the network device 102 obtains the first report by information processing.

In some embodiments, step S4102 is omitted, and the network device 102 autonomously implements the function indicated by the first report, or the above function is defaulted or set to default.

The information transmission method involved in the embodiments of the disclosure may include at least one of steps S4101 to S4103. For example, step S4101 may be implemented as an independent embodiment, step S4102 may be implemented as an independent embodiment, and step S4103 may be implemented as an independent embodiment.

For example, steps S4102 and S4103 may be combined and implemented as an independent embodiment; steps S4101 to S4103 may be combined and implemented as an independent embodiment, which is not limited herein.

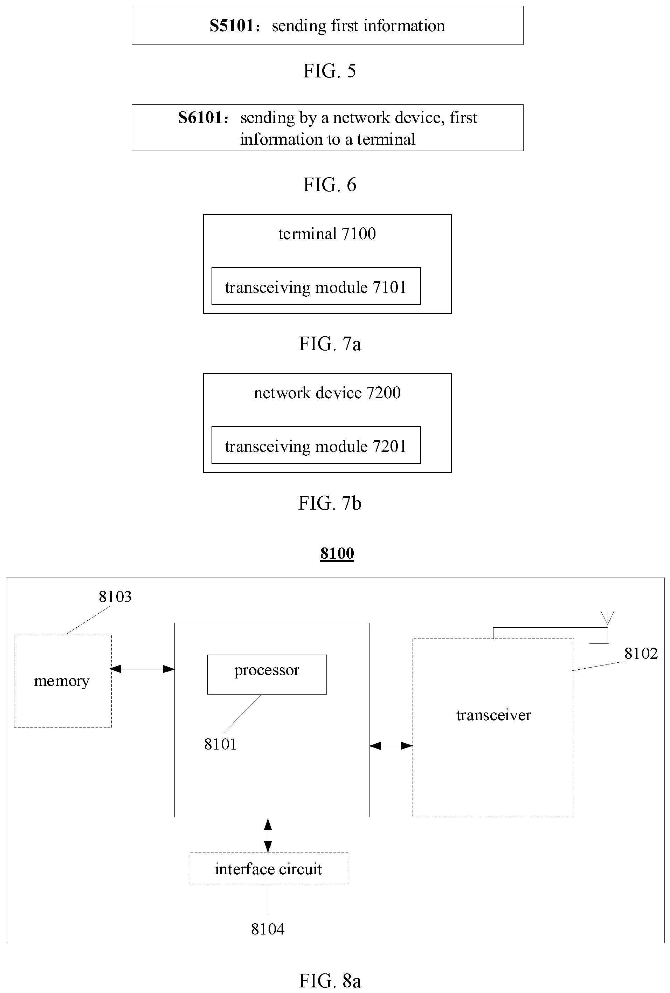

FIG. 5 is a flowchart illustrating an information transmission method according to an embodiment of the present disclosure. As shown in FIG. 5, embodiments of the disclosure relate to an information transmission method performed by a network device 102. The method includes the following step at S5101.

At S5101, first information is sent.

In some embodiments, the first information indicates resource configuration of a first SR, the first SR is used by the terminal to request the network device for the resource to send a first report by the terminal, and the first report includes a reference signal resource ID and a signal quality parameter corresponding to the reference signal resource ID.

In some embodiments, the method further includes: sending at least one of the first SR or HARQ feedback information, in which a resource of the first SR is configured to at least partially overlap with a resource of the HARQ feedback information.

In some embodiments, receiving the at least one of the first SR or the HARQ feedback information includes: receiving the at least one of the first SR or the HARQ feedback information, in which the at least one of the first SR or the HARQ feedback information is sent by the terminal based on a priority of the first SR and a priority of the HARQ feedback information.

In some embodiments, the priority of the HARQ feedback information is higher than the priority of the first SR.

In some embodiments, the first SR and the HARQ feedback information are located in the same resource, a PUCCH format 0 is used by the HARQ feedback information, and the priority of the HARQ feedback information is higher than the priority of the first SR; or the first SR and the HARQ feedback information are located in the same slot, a PUCCH format 1 is used by the HARQ feedback information, one of a PUCCH format 0 or the PUCCH format 1 is used by the first SR, and the priority of the HARQ feedback information is higher than the priority of the first SR.

In some embodiments, receiving the at least one of the first SR or the HARQ feedback information includes at least one of: receiving the HARQ feedback information, in which in a case that the terminal determines that the first SR and the HARQ feedback information are located in the same resource and a PUCCH format 0 is used by the HARQ feedback information, the HARQ feedback information is sent by the terminal in the same resource where the first SR and the HARQ feedback information are located; receiving the HARQ feedback information, in which in a case that the terminal determines that the first SR and the HARQ feedback information are located in the same slot, a PUCCH format 1 is used by the HARQ feedback information, and one of the PUCCH format 0 or the PUCCH format 1 is used by the first SR, the HARQ feedback information is sent by the terminal in the same slot; or receiving the first SR, in which in a case that the terminal determines that there is no HARQ feedback information, the first SR is sent by the terminal.

In some embodiments, receiving the at least one of the first SR or the HARQ feedback information includes: receiving the first SR and the HARQ feedback information by using the resource of the HARQ feedback information.

In some embodiments, in a case that the terminal determines that the first SR and the HARQ feedback information are in the same slot, one of a PUCCH format 2, a PUCCH format 3 or a PUCCH format 4 is used by the HARQ feedback information, the first SR and the HARQ feedback information are sent by the terminal in the slot, in which bits occupied by the first SR are appended to bits occupied by the HARQ feedback information.

In some embodiments, the method further includes: receiving the first SR and CSI by using a resource of the CSI.

In some embodiments, in a case that the terminal determines that the first SR and the CSI are located in the same slot, one of a PUCCH format 2, a PUCCH format 3 or a PUCCH format 4 is used by the CSI, the first SR and the CSI are sent by the terminal in the slot where the first SR and the CSI are located, in which bits occupied by the first SR are appended to bits occupied by CSI feedback information.

In some embodiments, a codepoint of the bits occupied by the first SR indicates an SR ID requesting a PUSCH resource.

In some embodiments, the method further includes: receiving the first report from the terminal based on a trigger event.

In some embodiments, the trigger event for triggering the first report includes at least one of: a change in a beam meeting a first condition; or a change in a beam group meeting a second condition, in which the beam group is configured to determine two beams for the terminal to simultaneously perform at least one of reception or transmission.

In some embodiments, the change in the beam meeting the first condition includes at least one of: a signal quality parameter of a first beam being lower than a first threshold, in which the first beam includes one of: a best beam indicated by a second report, all beams indicated by the second report, a worst beam indicated by the second report, or a beam indicated by the network device; and the second report is sent before sending the first report; a signal quality parameter of a second beam being higher than a second threshold, in which the second beam includes one of: a non-best beam indicated by a second report, a beam other than all beams indicated by the second report, and a beam other than a beam indicated by the network device; a signal quality parameter of a second beam being higher than a signal quality parameter of a first beam, and a difference between the signal quality parameter of the second beam and the signal quality parameter of the first beam being higher than a third threshold; currently determined K third beams with better quality parameters being not exactly the same as K fourth beams with better quality parameters indicated by the second report; or the K third beams without a beam indicated by the network device.

In some embodiments, the currently determined K third beams with better quality parameters being not exactly the same as the K fourth beams with better quality parameters indicated by the second report, includes at least one of: a difference between a quality parameter of a beam with a best quality parameter among the K fourth beams and a quality parameter of a beam with a best quality parameter among the K third beams being higher than a fourth threshold; or a difference between a quality parameter of a beam with a worst quality parameter among the K fourth beams and a quality parameter of a beam with a worst quality parameter among the K third beams being higher than a fifth threshold.

In some embodiments, the change in the beam group meeting the second condition includes at least one of: a beam associated with at least one first beam group of N beam groups indicated by a second report meeting a third condition, in which the second report is sent before sending the first report; or a quality parameter change value of at least one beam in the first beam group being higher than a sixth threshold.

In some embodiments, the beam associated with the at least one first beam group of the N beam groups indicated by the second report meeting the third condition includes at least one of: a signal quality parameter of a fifth beam associated with the first beam group being higher than the sixth threshold, in which the fifth beam includes one of: a non-best beam indicated by the second report, a beam other than all beams indicated by the second report, or a beam other than a beam indicated by the network device; a signal quality parameter of a sixth beam associated with the first beam group being lower than a seventh threshold, in which the sixth beam includes a beam indicated by the second report; or a signal quality parameter of a fifth beam being higher than a signal quality parameter of a sixth beam, and a difference between the signal quality parameter of the fifth beam and the signal quality parameter of the sixth beam being higher than an eighth threshold.

In some embodiments, the fifth beam includes two beams associated with the at least one first beam group: the signal quality parameter of the fifth beam is a single signal quality parameter corresponding to the two beams; and/or the sixth beam includes two beams associated with the at least one first beam group: the signal quality parameter of the sixth beam is a single signal quality parameter corresponding to the two beams.

In some embodiments, the first report includes a reference signal resource ID corresponding to at least one beam group and a signal quality parameter corresponding to the reference signal resource ID corresponding to the at least one beam group.

In some embodiments, the signal quality parameter includes at least one of: the signal quality parameter includes at least one of: a L1-RSRP, or a L1-SINR.

In some embodiments, the first SR includes one of: an SR for BFR, or an SR for the first report.

FIG. 6 is an interaction diagram illustrating an information transmission method according to an embodiment of the present disclosure. As shown in FIG. 6, embodiments of the disclosure relate to an information transmission method for a communication system 100. The method includes the following step at S6101.

At S6101, a network device sends first information to a terminal.

In some embodiments, the first information indicates resource configuration of a first SR, the first SR is used by the terminal to request the network device for a PUSCH resource to send a first report, and the first report includes a reference signal resource ID and a signal quality parameter corresponding to the reference signal resource ID.

For optional implementation of step S6101, reference may be made to step S2101 of FIG. 2, step S3101 of FIG. 3a, step S3201 of FIG. 3b, step S4101 of FIG. 4, step S5101 of FIG. 5, and other related parts in the embodiments involved in FIG. 2, FIG. 3a, FIG. 3b, FIG. 4, and FIG. 5, which will not be repeated here.

In some embodiments, the above method may include the method embodiments at the terminal side, the method embodiments at the network device side, etc., as described above, which will not be repeated here.

The following provides a specific example in combination with any of the above embodiments:
1. The terminal receives indication information indicating SR configuration. The SR is used to request a PUSCH resource, and the PUSCH resource is used to send a beam report.
2. The SR includes an SR for BFR.
3. The SR includes an SR for an event triggered beam report.
4. Regarding priorities of the SR and an HARQ-acknowledgement (ACK)
   a) When negative or positive SRs and HARQ in the PUCCH format 0 are located in the same resource, the HARQ is transmitted.
   b) When the SR in the PUCCH format 0 and the HARQ in the PUCCH format 1 are located in the same slot, the HARQ is transmitted.
   c) When the SR in the PUCCH format 1 and the HARQ in the PUCCH format 1 are located in the same slot, the HARQ is transmitted.
   d) When at least one SR is located in the same slot as the HARQ in the PUCCH format 2 or PUCCH format 3 or PUCCH format 4, the SR is placed after the HARQ (i.e., the SR is in high bits while the HARQ is in low bits).
      i. Furthermore, an indication is based on which SR was sent from the at least one SR, and a mapping relationship between its codepoint and different types of SRs is in ascending order:
         1. schedulingRequestResourceId: a schedulingRequestResourceId associated with schedulingRequestID-BFR-SCell, a schedulingRequestResourceId associated with schedulingRequestID-BFR, a schedulingRequestResourceId associated with schedulingRequestID-BFR2 if the UE provides two LRR capabilities, a schedulingRequestResourceId associated with schedulingRequestID-Beamreport, and a schedulingRequestResourceId associated with schedulingRequestID-LBT-Scell. The schedulingRequestResourceId associated with schedulingRequestID-Beamreport is a newly introduced SR. The above instance order is just one example, and the order of such SR may be placed before or after any traditional SR. For example, codepoints like 000, 001, 010, 011... correspond one-to-one with the SRs in the above order.
5. Multiplexing of SR and CSI.
   a) When the SR is located in the same slot as the CSI in the PUCCH format 2 or PUCCH format 3 or PUCCH format 4, at least one SR is placed after the CSI(i.e., the SR is in high bits while the CSI is in low bits).
      i. Furthermore, an indication is based on which SR was sent from at least one SR, and a mapping relationship between its codepoint and different types of SRs is in ascending order:
         1. schedulingRequestResourceId: a schedulingRequestResourceId associated with schedulingRequestID-BFR-SCell, a schedulingRequestResourceId associated with schedulingRequestID-BFR, a schedulingRequestResourceId associated with schedulingRequestID-BFR2 if the UE provides two LRR capabilities, a schedulingRequestResourceId associated with schedulingRequestID-Beamreport, and a schedulingRequestResourceId associated with schedulingRequestID-LBT-Scell. The schedulingRequestResourceId associated with schedulingRequestID-Beamreport is a newly introduced SR. The above instance order is just one example, and the order of such SR may be placed before or after any traditional SR.
6. Based on the above item 3, the trigger event includes at least one of the following situations a) to f).
   a) A current beam is below a threshold.
      i. The current beam is defined as:
         1. a best beam in a last report, or a beam most recently indicated by a base station, or all beams in the last report, or a worst beam in the last report.
   b) A candidate beam is above the threshold.
      i. the candidate beam is defined as: a non-best beam in the last report, a beam other than a beam included in the last report, or a beam other than a beam most recently indicated by the base station.
   c) The candidate beam is higher than the current beam by one offset.
      i. the definitions of the current beam and candidate beam are the same as above.
   d) the best K beams are different from the best K beams in the last report, or do not include the best beam in the last report, or the best K beams do not include the beam most recently indicated by the base station.
      i. Furthermore, a difference between best beams within the two sets is above the offset; or
      ii. a difference between worst beams within the two sets is above the offset.
         The following is specifically for group-based beam reporting, where a beam group includes groups used for downlink reception and/or uplink transmission, and two beams that may be used for simultaneous reception/transmission form a beam group.
   e) K groups are different from the K groups reported last time.
      i. This encompasses the case where, in at least one of the groups, one beam has changed.
         The group-based beam report includes at least two types:
         1) The first type includes two groups, and one beam from each of the two groups (reference signal resource ID, SSB ID, CSI-RS ID are actually reported) may support simultaneous reception at the terminal, or simultaneous transmission at the terminal, or both simultaneous reception and transmission at the terminal.
            i. Furthermore, when reporting, it is necessary to indicate whether simultaneous reception, simultaneous transmission, or both simultaneous reception and simultaneous transmission are supported.
         2) The second type includes at least one group, and two beams from each of the two groups (reference signal resource ID, SSB ID, CSI-RS ID are actually reported) may support simultaneous reception at the terminal, or simultaneous transmission at the terminal, or both simultaneous reception and transmission at the terminal.
            i. Furthermore, when reporting, it is necessary to indicate whether simultaneous reception, simultaneous transmission, or both simultaneous reception and simultaneous transmission are supported.
      ii. Further,
         1. the beam has changed in the at least one group, such as a candidate beam being above a threshold, or a previously reported beam being below the threshold, or a candidate beam being higher than the previously reported beam by one offset; or
         2. from the perspective of joint quality of the two beams, joint quality of a candidate group being higher than the threshold, current joint quality being lower than the threshold, or the joint quality of the candidate group being higher than the current joint quality by one offset (the definitions of 'candidate' and 'current' are the same as before).
            a) The joint quality may be considered as an average value of the two beams.
   f) The beam value in the last reported group has changed, and its change value exceeds the threshold.

By the method for configuring the SR for the event-triggered beam report, the accuracy and timeliness of beam measurement results are ensured, while reducing the signaling overhead.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network function node, a core network function node, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus comprises a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor invoking and the remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7a is a block diagram illustrating a terminal according to an embodiment of the present disclosure. As shown in FIG. 7a, the terminal 7100 may include at least one of modules such as a transceiving module 7101. In some embodiments, the transceiving module 7101 is configured to receive first information, in which the first information indicates resource configuration of a first SR, the first SR is used by the terminal to request a network device for a resource to send a first report, and the first report includes a reference signal resource ID and a signal quality parameter corresponding to the reference signal resource ID. Optionally, the transceiving module 7101 is configured to perform at least one of the communication steps such as sending and/or receiving (e.g., S2101, S2102, S2103, but not limited herein) performed by the terminal 101 in any of the above methods, which will not be repeated here.

FIG. 7b is a block diagram illustrating a network device according to an embodiment of the present disclosure. As shown in FIG. 7a, the network device 7200 may include at least one of modules such as a transceiving module 7201. In some embodiments, the transceiving module 7201 is configured to send first information, in which the first information indicates resource configuration of a first SR, the first SR is used by a terminal to request the network device for a resource to send a first report, and the first report includes a reference signal resource ID and a signal quality parameter corresponding to the reference signal resource ID. Optionally, the transceiving module is configured to perform at least one of the communication steps such as sending and/or receiving (e.g., S2101, S2102, S2103, but not limited herein) performed by the network device 102 in any of the above methods, which will not be repeated here.

FIG. 8a is a block diagram illustrating a communication device 8100 according to an embodiment of the present disclosure. The communication device 8100 may be a network device (e.g., an access network device, a core network function node, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 8100 may be used to implement the method in the above method embodiments. For details, reference may be made to the description in the above method embodiments.

As shown in FIG. 8a, the communication device 8100 may include one or more processors 8101. The processor 8101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. Optionally, the communication device 8100 is used to perform any one of the above methods. Optionally, one or more processors 8101 are used to call the instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps such as sending and/or receiving in the above method (e.g., S2101, S2102, S2103, but not limited herein), and the processor 8101 performs at least one of the other steps. In an optional embodiment, the transceiver may include a receiver and/or a transmitter, which may be separate or integrated together. Optionally, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 8100 further includes one or more memories 8103 for storing data. Optionally, all or part of the memory 8103 may be located outside the communication device 8100. In an optional embodiment, the communication device 8100 may include one or more interface circuits 8104. Optionally, the interface circuit 8104 is connected to the memory 8103. The interface circuit 8104 may be used to receive data from the memory 8103 or other devices, and may be used to send data to the memory 8103 or other devices. For example, the interface circuit 8104 may read data stored in the memory 8103 and send the data to the processor 8101.

The communication device 8100 in the description of the above embodiments may be a network device or a terminal, but the scope of the communication device 8100 described in the disclosure is not limited herein, and the structure of the communication device 8100 may not be limited by FIG. 8a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

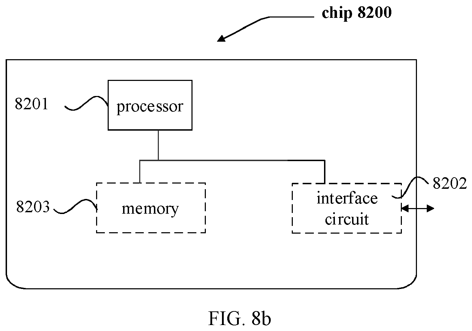

FIG. 8b is a block diagram illustrating a chip 8200 according to the embodiments of the present disclosure. For the case where the communication device 8100 may be a chip or a chip system, reference may be made to the block diagram of the chip 8200 shown in FIG. 8b, which is not limited herein.

The chip 8200 comprises one or more processors 8201. The chip 8200 is used to perform any one of the above methods.

In some embodiments, the chip 8200 further comprises one or more interface circuits 8202. Optionally, the terms such as interface circuit, interface, and transceiver pin may be used interchangeably. In some embodiments, chip 8200 further includes one or more memories 8203 for storing data. Optionally, all or part of the memory 8203 may be located outside of the chip 8200. Optionally, the interface circuit 8202 is connected to the memory 8203. The interface circuit 8202 may be used to receive data from the memory 8203 or other devices, and the interface circuit 8202 may be used to send data to the memory 8203 or other devices. For example, the interface circuit 8202 may read data stored in the memory 8203 and send the data to the processor 8201.

In some embodiments, the interface circuit 8202 performs at least one of the communication steps such as sending and/or receiving in the above method (e.g., S2101, S2102, S2103, but not limited herein). The interface circuit 8202 performs communication steps such as sending and/or receiving in the above method, for example, the interface circuit 8202 performs data interaction between the processor 8201, the chip 8200, the memory 8203 or the transceiver device. In some embodiments, the processor 8201 performs at least one of other steps.

The present disclosure also provides a storage medium for storing instructions. When the instructions are running on the communication device 8100, the communication device 8100 is caused to implement any one of the above methods. Optionally, the storage medium is an electronic storage medium. Optionally, the storage medium is a computer-readable storage medium, but it is not limited herein, and it may also be a storage medium readable by other devices. Optionally, the storage medium may be a non-transitory storage medium, but it is not limited herein, and it may also be a transitory storage medium.

The present disclosure also provides a program product. When the program product is executed by the communication device 8100, the communication device 8100 is caused to implement any one of the above methods. Optionally, the program product is a computer program product.

The present disclosure also provides a computer program. When the computer program is executed on a computer, the computer is caused to implement any one of the above methods.

## Claims

1. An information transmission method, performed by a terminal, comprising:
receiving first information, wherein the first information indicates resource configuration of a first scheduling request (SR), the first SR is used by the terminal to request a network device for a resource to send a first report, and the first report comprises a reference signal resource identifier (ID) and a signal quality parameter corresponding to the reference signal resource ID.

2. The method of claim 1, further comprising:
sending at least one of the first SR or hybrid automatic repeat request (HARQ) feedback information, wherein a resource of the first SR is configured to at least partially overlap with a resource of the HARQ feedback information.

3. The method of claim 2, wherein sending the at least one of the first SR or the HARQ feedback information comprises:
sending the at least one of the first SR or the HARQ feedback information based on a priority of the first SR and a priority of the HARQ feedback information.

4. The method of claim 2 or 3, wherein the priority of the HARQ feedback information is higher than the priority of the first SR.

5. The method of claim 4, wherein
the first SR and the HARQ feedback information are located in the same resource, a physical uplink control channel (PUCCH) format 0 is used by the HARQ feedback information, and the priority of the HARQ feedback information is higher than the priority of the first SR; or
the first SR and the HARQ feedback information are located in the same slot, a PUCCH format 1 is used by the HARQ feedback information, one of a PUCCH format 0 or the PUCCH format 1 is used by the first SR, and the priority of the HARQ feedback information is higher than the priority of the first SR.

6. The method of claim 2, wherein sending the at least one of the first SR or the HARQ feedback information comprises at least one of:
in a case that the first SR and the HARQ feedback information are located in the same resource, and a physical uplink control channel (PUCCH) format 0 is used by the HARQ feedback information, sending the HARQ feedback information in the resource where the first SR and the HARQ feedback information are located;
in a case that the first SR and the HARQ feedback information are located in the same slot, a PUCCH format 1 is used by the HARQ feedback information, and one of the PUCCH format 0 or the PUCCH format 1 is used by the first SR, sending the HARQ feedback information in the slot; or
in a case that there is no HARQ feedback information, sending the first SR.

7. The method of claim 2, wherein sending the at least one of the first SR or the HARQ feedback information comprises:
sending the first SR and the HARQ feedback information by using the resource of the HARQ feedback information.

8. The method of claim 7, wherein sending the first SR and the HARQ feedback information by using the resource of the HARQ feedback information comprises:
in a case that the first SR and the HARQ feedback information are in the same slot, one of a physical uplink control channel (PUCCH) format 2, a PUCCH format 3 or a PUCCH format 4 is used by the HARQ feedback information, sending the first SR and the HARQ feedback information in the slot, wherein bits occupied by the first SR are appended to bits occupied by the HARQ feedback information.

9. The method of any one of claims 1 to 8, further comprising:
sending the first SR and channel state information (CSI) by using a resource of the CSI.

10. The method of claim 9, wherein sending the first SR and the CSI by using the resource of the CSI comprises:
in a case that the first SR and the CSI are located in the same slot, one of a physical uplink control channel (PUCCH) format 2, a PUCCH format 3 or a PUCCH format 4 is used by the CSI, sending the first SR and the CSI in the slot where the first SR and the CSI are located, wherein bits occupied by the first SR are appended to bits occupied by CSI feedback information.

11. The method of claim 8 or 10, wherein a codepoint of the bits occupied by the first SR indicates an SR ID requesting a physical uplink shared channel (PUSCH) resource.

12. The method of any one of claims 1 to 11, further comprising: sending the first report based on a trigger event.

13. The method of claim 12, wherein the trigger event for triggering the first report comprises at least one of:
a change in a beam meeting a first condition; or
a change in a beam group meeting a second condition, wherein the beam group is configured to determine two beams for the terminal to simultaneously perform at least one of reception or transmission.

14. The method of claim 13, wherein the change in the beam meeting the first condition comprises at least one of:
the beam comprising a first beam, a signal quality parameter of the first beam being lower than a first threshold, wherein the first beam comprises one of: a best beam indicated by a second report, all beams indicated by the second report, a worst beam indicated by the second report, or a beam indicated by the network device; and the second report is sent before sending the first report;
the beam comprising a second beam, a signal quality parameter of the second beam being higher than a second threshold, wherein the second beam comprises one of: a non-best beam indicated by a second report, a beam other than all beams indicated by the second report, and a beam other than a beam indicated by the network device;
a signal quality parameter of a second beam being higher than a signal quality parameter of a first beam, and a difference between the signal quality parameter of the second beam and the signal quality parameter of the first beam being higher than a third threshold;
currently determined K third beams with better quality parameters being not exactly the same as K fourth beams with better quality parameters indicated by the second report, wherein the beam comprises the third beams and the fourth beams; or
the K third beams without a beam indicated by the network device.

15. The method of claim 14, wherein the currently determined K third beams with better quality parameters being not exactly the same as the K fourth beams with better quality parameters indicated by the second report, comprises at least one of:
a difference between a quality parameter of a beam with a best quality parameter among the K fourth beams and a quality parameter of a beam with a best quality parameter among the K third beams being higher than a fourth threshold; or
a difference between a quality parameter of a beam with a worst quality parameter among the K fourth beams and a quality parameter of a beam with a worst quality parameter among the K third beams being higher than a fifth threshold.

16. The method of claim 13, wherein the change in the beam group meeting the second condition comprises at least one of:
a beam associated with at least one first beam group of N beam groups indicated by a second report meeting a third condition, wherein the second report is sent before sending the first report; or
a quality parameter change value of at least one beam in the first beam group being higher than a sixth threshold.

17. The method of claim 16, wherein the beam associated with the at least one first beam group of the N beam groups indicated by the second report meeting the third condition comprises at least one of:
a signal quality parameter of a fifth beam being higher than the sixth threshold, wherein the fifth beam comprises one of: a non-best beam indicated by the second report, a beam other than all beams indicated by the second report, or a beam other than a beam indicated by the network device; and the fifth beam is associated with the first beam group;
a signal quality parameter of a sixth beam being lower than a seventh threshold, wherein the sixth beam comprises a beam indicated by the second report; and the sixth beam is associated with the first beam group; or
a signal quality parameter of a fifth beam being higher than a signal quality parameter of a sixth beam, and a difference between the signal quality parameter of the fifth beam and the signal quality parameter of the sixth beam being higher than an eighth threshold.

18. The method of claim 17, wherein,
the fifth beam comprises two beams associated with the at least one first beam group: the signal quality parameter of the fifth beam is a single signal quality parameter corresponding to the two beams; and/or
the sixth beam comprises two beams associated with the at least one first beam group: the signal quality parameter of the sixth beam is a single signal quality parameter corresponding to the two beams.

19. The method of any one of claims 13 to 18, wherein the first report comprises a reference signal resource ID corresponding to at least one beam group and a signal quality parameter corresponding to the reference signal resource ID corresponding to the at least one beam group.

20. The method of any one of claims 1 to 19, wherein the signal quality parameter comprises at least one of:
a layer 1-reference signal received power (L1-RSRP); or
a layer 1-signal to interference plus noise ratio (L1-SINR).

21. The method of any one of claims 1 to 20, wherein the first SR comprises one of:
an SR for beam failure recovery (BFR); or
an SR for the first report.

22. An information transmission method, performed by a network device, comprising:
sending first information, wherein the first information indicates resource configuration of a first scheduling request (SR), the first SR is used by a terminal to request the network device for a resource to send a first report, and the first report comprises a reference signal resource identifier (ID) and a signal quality parameter corresponding to the reference signal resource ID.

23. The method of claim 22, further comprising:
receiving at least one of the first SR or hybrid automatic repeat request (HARQ) feedback information, wherein a resource of the first SR is configured to at least partially overlap with a resource of the HARQ feedback information.

24. The method of claim 23, wherein receiving the at least one of the first SR or the HARQ feedback information comprises:
receiving the at least one of the first SR or the HARQ feedback information, wherein the at least one of the first SR or the HARQ feedback information is sent by the terminal based on a priority of the first SR and a priority of the HARQ feedback information.

25. The method of claim 23 or 24, wherein the priority of the HARQ feedback information is higher than the priority of the first SR.

26. The method of claim 25, wherein,
the first SR and the HARQ feedback information are located in the same resource, a physical uplink control channel (PUCCH) format 0 is used by the HARQ feedback information, and the priority of the HARQ feedback information is higher than the priority of the first SR; or
the first SR and the HARQ feedback information are located in the same slot, a PUCCH format 1 is used by the HARQ feedback information, one of a PUCCH format 0 or the PUCCH format 1 is used by the first SR, and the priority of the HARQ feedback information is higher than the priority of the first SR.

27. The method of claim 23, wherein receiving the at least one of the first SR or the HARQ feedback information comprises at least one of:
receiving the HARQ feedback information, wherein in a case that the terminal determines that the first SR and the HARQ feedback information are located in the same resource and a physical uplink control channel (PUCCH) format 0 is used by the HARQ feedback information, the HARQ feedback information is sent by the terminal in the resource where the first SR and the HARQ feedback information are located;
receiving the HARQ feedback information, wherein in a case that the terminal determines that the first SR and the HARQ feedback information are located in the same slot, a PUCCH format 1 is used by the HARQ feedback information, and one of the PUCCH format 0 or the PUCCH format 1 is used by the first SR, the HARQ feedback information is sent by the terminal in the slot; or
receiving the first SR, wherein in a case that the terminal determines that there is no HARQ feedback information, the first SR is sent by the terminal.

28. The method of claim 23, wherein receiving the at least one of the first SR or the HARQ feedback information comprises:
receiving the first SR and the HARQ feedback information by using the resource of the HARQ feedback information.

29. The method of claim 28, wherein
in a case that the terminal determines that the first SR and the HARQ feedback information are in the same slot, one of a physical uplink control channel (PUCCH) format 2, a PUCCH format 3 or a PUCCH format 4 is used by the HARQ feedback information, the first SR and the HARQ feedback information are sent by the terminal in the slot, wherein bits occupied by the first SR are appended to bits occupied by the HARQ feedback information.

30. The method of any one of claims 22 to 29, further comprising:
receiving the first SR and channel state information (CSI) by using a resource of the CSI.

31. The method of claim 30, wherein,
in a case that the terminal determines that the first SR and the CSI are located in the same slot, one of a physical uplink control channel (PUCCH) format 2, a PUCCH format 3 or a PUCCH format 4 is used by the CSI, the first SR and the CSI are sent by the terminal in the slot where the first SR and the CSI are located, wherein bits occupied by the first SR are appended to bits occupied by CSI feedback information.

32. The method of claim 29 or 31, wherein a codepoint of the bits occupied by the first SR indicates an SR ID requesting a physical uplink shared channel (PUSCH) resource.

33. The method of any one of claims 22 to 32, further comprising: receiving the first report from the terminal based on a trigger event.

34. The method of claim 33, wherein the trigger event for triggering the first report comprises at least one of:
a change in a beam meeting a first condition; or
a change in a beam group meeting a second condition, wherein the beam group is configured to determine two beams for the terminal to simultaneously perform at least one of reception or transmission.

35. The method of claim 34, wherein the change in the beam meeting the first condition comprises at least one of:
a signal quality parameter of a first beam being lower than a first threshold, wherein the first beam comprises one of: a best beam indicated by a second report, all beams indicated by the second report, a worst beam indicated by the second report, or a beam indicated by the network device; and the second report is sent before sending the first report;
a signal quality parameter of a second beam being higher than a second threshold, wherein the second beam comprises one of: a non-best beam indicated by a second report, a beam other than all beams indicated by the second report, and a beam other than a beam indicated by the network device;
a signal quality parameter of a second beam being higher than a signal quality parameter of a first beam, and a difference between the signal quality parameter of the second beam and the signal quality parameter of the first beam being higher than a third threshold;
currently determined K third beams with better quality parameters being not exactly the same as K fourth beams with better quality parameters indicated by the second report; or
the K third beams without a beam indicated by the network device.

36. The method of claim 35, wherein the currently determined K third beams with better quality parameters being not exactly the same as the K fourth beams with better quality parameters indicated by the second report, comprises at least one of:
a difference between a quality parameter of a beam with a best quality parameter among the K fourth beams and a quality parameter of a beam with a best quality parameter among the K third beams being higher than a fourth threshold; or
a difference between a quality parameter of a beam with a worst quality parameter among the K fourth beams and a quality parameter of a beam with a worst quality parameter among the K third beams being higher than a fifth threshold.

37. The method of claim 34, wherein the change in the beam group meeting the second condition comprises at least one of:
a beam associated with at least one first beam group of N beam groups indicated by a second report meeting a third condition, wherein the second report is sent before sending the first report; or
a quality parameter change value of at least one beam in the first beam group being higher than a sixth threshold.

38. The method of claim 37, wherein the beam associated with the at least one first beam group of the N beam groups indicated by the second report meeting the third condition comprises at least one of:
a signal quality parameter of a fifth beam associated with the first beam group being higher than the sixth threshold, wherein the fifth beam comprises one of: a non-best beam indicated by the second report, a beam other than all beams indicated by the second report, or a beam other than a beam indicated by the network device;
a signal quality parameter of a sixth beam associated with the first beam group being lower than a seventh threshold, wherein the sixth beam comprises a beam indicated by the second report; or
a signal quality parameter of a fifth beam being higher than a signal quality parameter of a sixth beam, and a difference between the signal quality parameter of the fifth beam and the signal quality parameter of the sixth beam being higher than an eighth threshold.

39. The method of claim 38, wherein,
the fifth beam comprises two beams associated with the at least one first beam group: the signal quality parameter of the fifth beam is a single signal quality parameter corresponding to the two beams; and/or
the sixth beam comprises two beams associated with the at least one first beam group: the signal quality parameter of the sixth beam is a single signal quality parameter corresponding to the two beams.

40. The method of any one of claims 34 to 39, wherein the first report comprises a reference signal resource ID corresponding to at least one beam group and a signal quality parameter corresponding to the reference signal resource ID corresponding to the at least one beam group.

41. The method of any one of claims 22 to 40, wherein the signal quality parameter comprises at least one of:
a layer 1-reference signal received power (L1-RSRP); or
a layer 1-signal to interference plus noise ratio (L1-SINR).

42. The method of any one of claims 22 to 41, wherein the first SR comprises one of:
an SR for beam failure recovery (BFR); or
an SR for the first report.

43. An information transmission method, performed by a communication system, comprising:
sending, by a network device, first information to a terminal, wherein the first information indicates resource configuration of a first scheduling request (SR), the first SR is used by the terminal to request the network device for a physical uplink shared channel (PUSCH) resource to send a first report, and the first report comprises a reference signal resource identifier (ID) and a signal quality parameter corresponding to the reference signal resource ID.

44. A terminal, comprising: a transceiving module configured to receive first information, wherein the first information indicates resource configuration of a first scheduling request (SR), the first SR is used by the terminal to request a network device for a resource to send a first report, and the first report comprises a reference signal resource identifier (ID) and a signal quality parameter corresponding to the reference signal resource ID.

45. A network device, comprising: a transceiving module configured to send first information, wherein the first information indicates resource configuration of a first scheduling request (SR), the first SR is used by a terminal to request the network device for a resource to send a first report, and the first report comprises a reference signal resource identifier (ID) and a signal quality parameter corresponding to the reference signal resource ID.

46. A communication system, comprising a terminal and a network device, wherein the terminal is configured to perform the information transmission method of any one of claims 1 to 21, and the network device is configured to perform the information transmission method of any one of claims 22 to 42.

47. A communication device, comprising one or more processors, wherein the processor is configured to call instructions to cause the communication device to perform the information transmission method of any one of claims 1 to 21 or the information transmission method of claims 22 to 42.

48. A storage medium storing instructions that, when executed on a communication device, cause the communication device to perform the information transmission method of any one of claims 1 to 21 or the information transmission method of claims 22 to 42.
